# EUROPÄISCHE PATENTSCHRIFT

(11) **EP 2 163 444 B1**
(45) Veröffentlichungstag und Bekanntmachung des Hinweises auf die Patenterteilung: **12.01.2011**
(21) Anmeldenummer: 08105310.0
(22) Anmeldetag: 11.09.2008
(51) Int. Cl.: B60S 9/08, F16H 63/30

(54) **Höhenverstellbare Stütze für Sattelauflieger oder dergleichen**
Height adjustable support for semi-trailer or similar
Support réglable en hauteur pour semi-remorques ou analogues

(43) Veröffentlichungstag der Anmeldung: 17.03.2010
(73) Patentinhaber: SAF-HOLLAND Verkehrstechnik GmbH, 78224 Singen-Hohentwiel (DE)
(72) Erfinder: Riedl, Reinhold, 63897 Miltenberg (DE)
(74) Vertreter: Bauer, Clemens

(56) Entgegenhaltungen:
- DE-A1- 19 836 635
- DE-C1- 3 626 621
- US-A1- 2001 020 781

## Beschreibung

Die Erfindung bezieht sich auf eine höhenverstellbare Stütze für Sattelauflieger oder dergleichen gemäß dem Oberbegriff des Anspruchs 1.

Derartige Stützen werden paarweise im vorderen Bereich eines Sattelaufliegers angeordnet und können im Schnellgang in Abstütz- oder Transportstellung gebracht werden und erforderlichenfalls im Lastgang zum Anheben einer Teilmasse des Sattelaufliegers benutzt werden.

Eine derartige Sattelaufliegerstütze ist aus der DE-U-88 13 558.6 bekannt. In Fig.1 und Fig.2 ist ein vorn an das so genannte Außenrohr der Stütze angebautes Schaltgetriebe, welches einen angeflanschten Deckel aufweist, zu ersehen. Eine Antriebswelle ist dabei im Deckel des Schaltgetriebes und in der Lagerplatte, in der auch die Gewindespindel lagert, gelagert.

Eine solche Sattelaufliegerstütze baut nicht nur sperrig sondern es besteht dabei nachteiliger Weise die Gefahr der Spaltrostbildung zwischen dem Außenrohr und dem Boden des angebauten Schaltgetriebes. Und außerdem birgt die Anflanschung des Getriebedeckels die Gefahr einer Undichtigkeit. Letztere ist besonders von außen nach innen bedenklich, denkt man an Schmutz- und Salznebel auf den Straßen oder das Dampfstrahlen beim Reinigen, was den Getriebeteilen schaden kann.

Die EP 0 675 029 zeigt eine Getriebeeinrichtung mit Abstützvorrichtung für Sattelauflieger. Dabei ist ein Schaltgetriebe auf der Rückseite des so genannten oberen Beinrohres angeordnet, das eine GetriebegehäuseAbdeckung aufweist, die zugleich als Anschraubplatte für die Abstützvorrichtung an den Rahmen des Sattelaufliegers dient.

Eine Antriebswelle ist hierbei in der vorderen Wand des oberen Beinrohres und der Getriebegehäuseabdeckung gelagert.

Eine so ausgebildete Stütze für Sattelauflieger weist nicht nur aufgrund der oben dargelegten Risiken bestehender, abzudichtender Schnittstellen auf, sondern bedingt eine starke Dimensionierung und Verrippung des Getriebegehäuses, weil die gesamte Stützlast über das Getriebegehäuse in die Stütze eingeleitet werden muss.

Ein gattungsgemäßes Stützenpaar ist auch aus der EP 1 104 369 B1 und DE 198 36 635 C5 bekannt. Bei der Getriebekonzeption dieser so genannten Vorrichtung zum Abstützen eines Aufliegers eines Sattelschleppers ist eine Getriebeeingangswelle einerseits gemeinsam mit der Spindel in einem Lagerbock gelagert. Die zweite Lagerung der Getriebeeingangswelle erfolgt dabei in einer, eine große Öffnung der äußeren so genannten Lagerhülse verschließenden, abnehmbaren Abdeckung. Außerdem befindet sich in dieser Abdeckung die Lagerung eines durchmessergroßen Zahnrades.

Auch diese Konzeption ist aufgrund der an die äußere Lagerhülse angebauten und überstehenden aufwendigen Abdeckung mit ihren konvexen Lagerungen und der der großen, abzudichtenden Schnittstelle ungünstig und daher unbefriedigend.

Aus der PCT/EP20071058194 ist eine Stütze für Sattelauflieger zu ersehen, die ein Flanschlager auf ihrer Vorderseite aufweist.

Die abzudichtende Schnittstelle zwischen dem Schaftrohrkörper und der Lagerhülse ist gegen über dem vorher beschriebenen Stand der Technik gering.

Die höhenmäßige Anordnung des Kurbeltriebs oberhalb des Getriebeabtriebszapfens ist bezüglich des Stützenanbaus in Grenzfällen ungünstig.

Die US-2001/0020781 A1 betrifft eine höhenverstellbare Stütze für Sattelauflieger eines Anhängers mit einem Innenrohr und einem Außenrohr, welche über einen Spindeltrieb zueinander verschiebbar sind, um einen Höhenausgleich zu schaffen, wobei der Spindeltrieb über eine mittels Handkurbel antreibbare Eingangswelle wahlweise in zwei verschiedenen Untersetzungen betrieben werden kann.

Die DE 36 26 621 C1 betrifft eine Anordnung zum Notbetrieb von Stützsystemen für Anhänger, welche unabhängig von den Ausfallmöglichkeiten des Hydraulikdruckes ist.

Der Erfindung liegt die Aufgabe zugrunde, eine höhenverstellbare Stütze für Sattelauflieger vorzuschlagen, bei der, bei höhenmäßig unterhalb der Abtriebswelle angeordnetem Antrieb, am Schaftrohrkörper spaltbildende Schnittstellen wie Anflanschungen minimiert bzw. gänzlich vermieden werden.

Diese Aufgabe wird durch die im Anspruch 1 gekennzeichnete Stütze gelöst.

Bei der erfindungsgemäßen Stütze sind das Schnellgangzahnrad und ein Ritzen-Kupplungsteil, das senkrecht auf die Spindel zu läuft und die Spindel in einem gemeinsamen Lagerungenteil gelagert oder es lagern nur das Ritzel-Kupplungsteil und die Spindel im Lagerungenteil und das Schnellgangzahnrad ist im Schaftrohrkörper abgelagert.

Zur Kostenminderung gegenüber herkömmlicher Stützen wird vorgeschlagen, anstatt der einstückigen Herstellung von Getriebeeingangswelle und Lastgangritzel aus hochwertigem Werkstoff, das im Lagerungenteil gelagerte Ritzel-Kupplungsteil mit einer dem Lastgangritzel adäquaten Verzahnung zu versehen und ein daran anschließendes Triebstück vorzusehen, das in einem am Schaftrohrkörper angeordneten Außenlager gelagert ist.

Wirtschaftlicher Weise muss so lediglich nur für die Herstellung des kleineren Ritzel-Kupplungsteils notwendigerweise ein hochwertiger Zahnradwerkstoff verwendet werden. Das Triebstück kann aus niedrig wertigem Werkstoff, z.B. Baustahl, bestehen.

In bevorzugter Ausgestaltung weist die erfindungsgemäße Stütze keinerlei abzudichtende Schnittstellen an den Außenseiten des Schaftrohrkörpers auf, wenn das zur Lagerung des Triebstückes dienende Außenlager spaltfrei und unlösbar mit dem Schaftrohrkörper verbunden ist.

Wenn das Außenlager einen Einsatz aufweist, der größer als der relativ kleine Durchmesser des Ritzel-Kupplungsteils ist, können nach dessen Herausnahme aus dem Schaftrohrkörper das Ritzel-Kupplungsteil und das Triebstück in günstiger Weise ein- oder ausgebaut werden.

Die einfache Herausnahme des Einsatzes kann leicht vorgenommen werden, wenn der Einsatz lediglich mit nur einem Verriegelungselement fixiert ist.

Ein aufwendiges Lösen bzw. Verschrauben mehrerer Schrauben wie bei herkömmlicher Anflanschungen wird dadurch vorteilhaft vermieden.

Das Ritzel-Kupplungsteil kann so gestaltet sein, dass es für den Schnellgangbetrieb beabstandet zu seiner Verzahnung des Lastgangritzels auch mindestens einen radial abstehenden Mitnehmer zum alternativen Eingriff in, im Schnellgangzahnrad befindliche Nuten aufweist.

Vorzugsweise wird anstatt eines oder mehrerer Mitnehmer am Ritzel-Kupplungsteil die Ausbildung einer Kuppelverzahnung und eine damit zusammenwirkende Innenverzahnung des Schnellgangzahnrades vorgeschlagen.

Es ist für das Erreichen der beschriebenen Geschlossenheit des Schaftrohrkörpers und der Getriebemontage von Vorteil die Lagerung der Getriebeabtriebswelle auf der Vorderseite der Stütze in einer geschlossenen Ausprägung des Schaftrohrkörpers unterzubringen.

Die Getriebeabtriebswelle kann dadurch von der Rückseite der Stütze, die Zahnräder formschlüssig aufnehmend, einfach eingeschoben, bzw. ausgebaut werden.

Aus Kostengründen und der konstruktiven Zielsetzung einen möglichst großen Schnellgang zu erreichen kann es vorteilhaft sein das Verzahnungsprofil des Schnellgangritzels in die Getriebeabtriebswelle einzubringen.

Schließlich wird vorgeschlagen das Außenlager nach dem Reibschweißverfahren an den Schaftrohrkörper anzuschweißen.

Weitere vorteilhafte Ausgestaltungen der Erfindung gehen aus den Unteransprüchen hervor.

Die Erfindung wird anschließend anhand der Zeichnungen erläutert.

Es zeigen:
Fig. 1 eine Vorderansicht der erfindungsgemäßen Stütze,
Fig. 2 eine Seitenansicht der in Fig.1 gezeigten Stütze,
Fig. 3 einen Längsschnitt der in Fig.1 gezeigten Stütze in Lastgangschaltstellung entlang der Linie A-A,
Fig. 4 einen Längsschnitt der in Fig.1 gezeigten Stütze in Schnellgangschaltstellung entlang der Linie A-A,
Fig. 5 einen Längsschnitt gemäß der in Fig.3 gezeigten Stütze in einer alternativen Ausgestaltung.

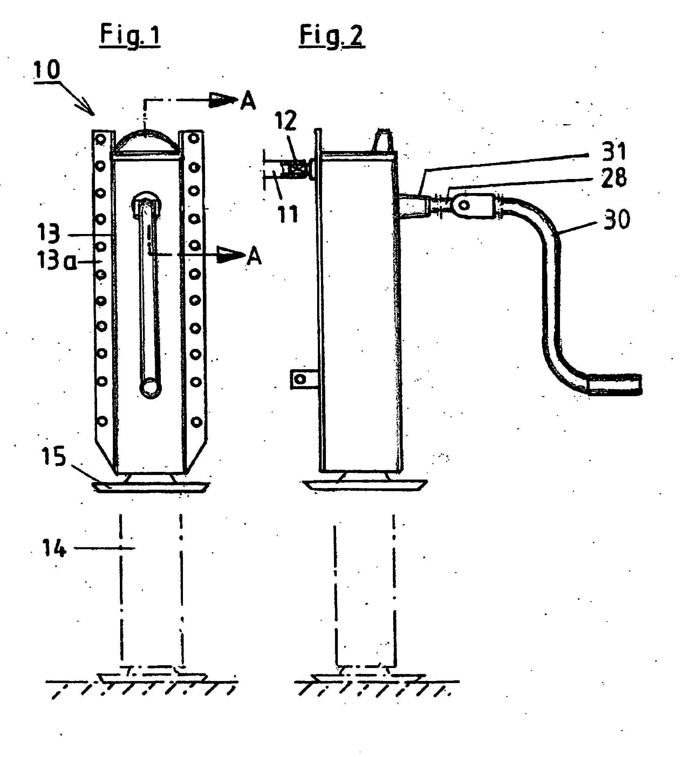

Die in Fig.1 und 2 gezeigte Stütze 10 wird paarweise am Chassis eines Sattelaufliegers in dessen vorderen Bereich befestigt. Die Stützen 10 eines Paares sind mittels eines Drehverbindungsteils 11 an den Getriebeabtriebswellen 12 miteinander verbunden und in Transportstellung eingefahren, d.h. in verkürztem Zustand. Und bevor der Sattelauflieger vom Sattelschlepper abgekoppelt wird, werden sie ausgefahren.

Die Stütze 10 weist einen Schaftrohrkörper 13 und ein darin längsverschiebbar angeordnetes Stützeninnenrohr 14 auf. Der Innenbereich des Schaftrohrkörpers 13 und das Stützeninnenrohr 14 besitzen vorzugsweise quadratische Querschnitte. Die Stütze 10 wird über die am Schaftrohrkörper 13 befindliche Anflanschschenkel 13a am Sattelaufliegerrahmen befestigt.

Am unteren Ende des Stützeninnenrohres 14 ist ein Fuß 15 zum Aufsetzen auf den Boden befestigt.

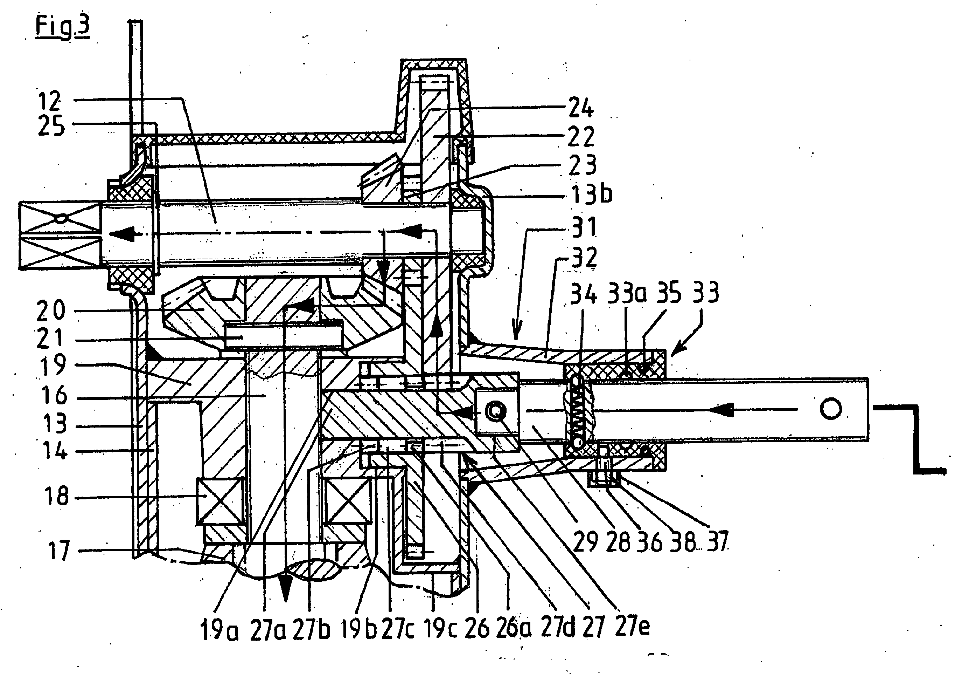

Wie Fig. 3 zeigt weist die Stütze 10 eine Spindel 16 mit einer Mutter 17 auf. Und die Mutter 17 ist mit dem Stützeninnenrohr 14 verbunden (nicht gezeigt). Auf einer Scheibe über der Spindelschulter sitzt ein Axiallager 18, das sich an einem im Schaftrohrkörper 13 befestigten Lagerungenteil 19 abstützt.

Oberhalb des Lagerungenteils 19 befindet sich ein Tellerrad 20, das mittels eines Stifts 21, der die Spindel 16 trägt, drehfest mit der Spindel 16 verbunden ist. Oberhalb des Tellerrades 20 ist die Getriebeabtriebswelle 12 angeordnet, die auf der Vorderseite der Stütze 10 innerhalb einer geschlossenen Ausprägung 13b des Schaftrohrkörpers 13 und auf der Rückseite in einem durchgehenden Lager im Schaftrohrkörper 13 gelagert ist.

Auf der Getriebeabtriebswelle 12 sitzen in drehfester Anordnung ein Lastgangzahnrad 22, ein Schnellgangritzel 23 und ein Kegelritzel 24.

Und die von der Rückseite der Stütze 10 ein- und ausbaubare Getriebeabtriebswelle 12 ist mittels einer Stecksicherungsscheibe 25 axial fixiert.

Im Lagerungenteil 19 ist vertikal die Spindel 16 gelagert. Horizontal lagert im Lagerungenteil 19, in einer Lagerbohrung 19a, ein Ritzel- Kupplungstück 27 und in einer Senklagerbohrung 19b erfolgt die Lagerung eines Schnellgangzahnrades 26, das innen eine Kuppelverzahnungsaufnahme 26a aufweist,

Ferner besitzt das Lagerungenteil 19 eine Bodenkröpfung 19c, deren Innenbereich mit der Innenseite der vorderen Wand des Schaftrohrkörpers 13 einen Einbauraum für das Schnellgangzahnrad 26 und einen Schmiermittelraum bildet.

Das Ritzel-Kupplungsteil 27 weist einen Lagerzapfen 27a, eine Kuppelverzahnung 27b einen Freischaltbereich 27c, eine Verzahnung des Lastgangritzels 27d und eine Bohrung 27e auf. Die Bohrung 27e dient zur Anbringung eines Triebstücks 28 an das Ritzel-Kupplungsteil 27, das mittels eines Spannstifts 29 drehfest gemacht ist.

Das Triebstück 28, an dem eine Handkurbel 30 befestigt sein kann ist in einem Außenlager 31 gelagert. Das Außenlager 31 besteht aus einer Lagerhülse 32, die an den Schaftrohrkörper 13 angeschweißt ist. Und Im vorderen Bereich der Lagerhülse 32 befindet sich ein Einsatz 33, der innen zwei Radialnuten 33a, in die eine in das Triebstück 28 eingebaute Kugelarretierung 34 einrasten.kann, und in seinem Sitzbereich einen Runddichtring 35 aufweist. Der Einsatz 33 ist mittels einer in die Lagerhülse 32 des Außenlagers 31 eingeschraubten Stiftschraube 36, welche durch eine, mit einer Kappe 37 abgedeckten Kontermutter 38 gesichert ist, festgesetzt.

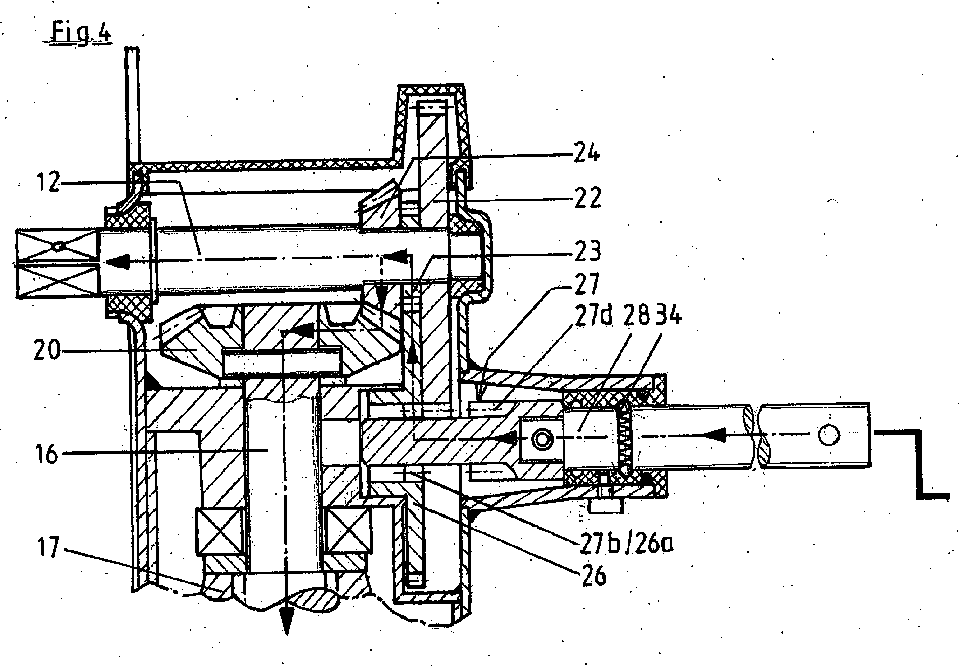

Die Getriebefunktionen der Stütze 10 gemäß Fig. 3 und 4 sind wie folgt:

Für den Lastgangbetrieb wird das Ritzel-Kupplungsteil 27 über das Triebstück 28 eingeschoben und danach rastet die Kugelarretierung 34 in die hintere Radialnut 33a des Einsatz 33 im Außenlager 31 ein und die Verzahnung des Lastgangritzels 27d ist in Eingriff mit dem Lastgangzahnrad 22.

Nach Einleitung eines Drehmoments mittels der Handkurbel 30 in das Triebstück 28 erfolgt dessen Übernahme durch das Ritzel-Kupplungsteil 27. Der weitere Kraftfluss erfolgt dann, gemäß der in Fig. 3 ersichtlichen Pfeillinien, auf das Lastgangzahnrad 22, über die Getriebeabtriebswelle 12, auf das Kegelritzel 24 und über das Tellerrad 20 auf die Spindel 16, die die Mutter 17 bewegt.

Beim Schnellgangbetrieb wird das Ritzel-Kupplungsteil 27 über das nach außen bewegten Triebstück 28 verschoben und danach rastet die Kugelarretierung 34 in die vordere Radialnut 33a des Einsatzes 33 im Außenlager 31 ein und die Kuppelverzahnung 27b des Ritzel- Kupplungteils 27 ist in Eingriff mit der Kuppelverzahnungsaufnahme 26a im Schnellgangzahnrad 26.

Der Kraftfluss erfolgt beim Drehen der Handkurbel 30, wie in Fig.4 mit strichpunktierten Pfeillinien gezeigt, über das Triebstück 28 auf das Ritzel-Kupplungsteil 27 und wird von dessen Kuppelverzahnung 27b und der Kuppelverzahnungsaufnahme 26a in das Schnellgangzahnrad 26 eingeleitet. Das Schnellgangzahnrad 26 treibt dann das Schnellgangritzel 23 an und der Kraftfluss setzt sich, wie oben fort.

Zwischen den beiden beschriebenen Schaltstellungen befindet sich, ermöglicht durch das Vorhandensein des Freischaltbereichs 27c am Ritzel-Kupplungsteil 27, eine Freigangstellung, wobei das Ritzel - Kupplungteil 27 weder in die Verzahnung des Lastgangzahnrades 22 noch in das Schnellgangzahnrad 26 eingreift. Diese Schaltstellung dient dazu, unter ggf. erforderlichen geringen Drehens der Kurbel 30, zur Umschaltung in die Verzahnung des jeweils gewünschten Gangs einzufinden.

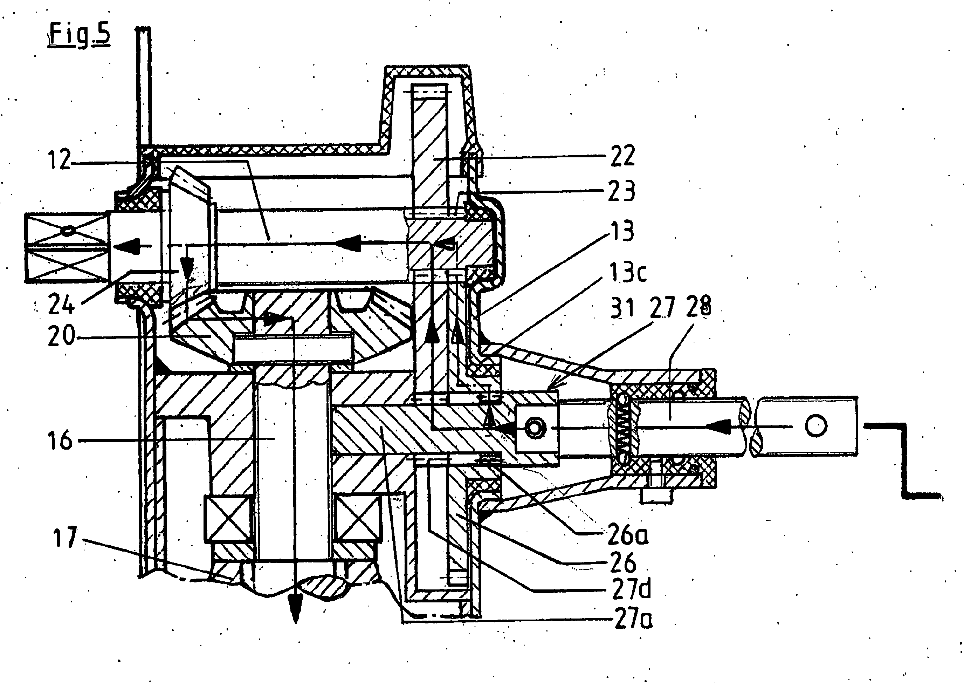

Die Fig.5 zeigt die Stütze 10 in einer anderen Ausgestaltung.

Das Schnellgangzahnrad 26 ist hierbei in einer im vorderen Wandbereich des Schaftrohrkörpers 13 befindlichen, ausgebüchsten Halsung 13c gelagert.

Das Ritzel-Kupplungsteil 27 befindet sich in der Lastgangstellung und der Kraftfluss wird ebenfalls mit Pfeillinien aufgezeigt.

Mit strichpunktierten Pfeillirtien ist dargestellt, dass nach dem Verschieben des Ritzel-Kupplungsteils 27 in die Schnellgangstellung ein vom Triebstück 28 auf das Ritzel-Kupplungsteil 27 übertragenes Kurbeldrehmornent über die Verzahnung des Lastgangritzels 27d des Ritzel- Kupplungteils 27 und die Kuppelverrzahnungsaufnahme 26a in das Schnellgangzahnrad 26 eingeleitet wird.

Und wie vom Schnellgangzahnrad 26 der Kraftfluss auf eine Verzahnung entsprechend des Schnellgangritzels 23 an der Getriebeabtriebswelle 12 erfolgt. Der weitere Kraftverlauf ist ab dort gemäß dem des Lastgangs.

### Bezugszeichenliste

10 Stütze
11 Drehverbindungsteil
12 Getriebeabtriebswelle
13 Schaftrohrkörper
13a Anflanschschenkel
13b Ausprägung
13c Halsung
14 Stützeninnenrohr
15 Fuß
16 Spindel
17 Mutter
18 Axiallager
19 Lagerungenteil
19a Lagerbohrung
19b Senklagerbohrung
19c Bodenkröpfung
20 Tellerrad
21 Stift
22 Lastgangzahnrad
23 Schnellgangritzel
24 Kegelritzel
25 Stecksicherungsscheibe
26 Schnellgangzahnrad 26a Kuppelverzahnungsaufnahme
27 Ritzel-Kupplungsteil
27a Lagerzapfen
27b Kuppelverzahnung
27c Freischaltbereich
27d Verzahnung des Lastgangritzels
27e Bohrung
28 Triebstück
29 Spannstift
30 Handkurbel
31 Außenlager
32 Lagerhülse
33 Einsatz
33a Radialnut
34 Kugelarretierung
35 Runddichtring
36 Stiftschraube
37 Kappe
38 Kontermutter

## Patentansprüche

1. Höhenverstellbare Stütze für Sattelauflieger oder dergleichen, umfassend einen ortsfest angebrachten Schaftrohrkörper,
ein darin angeordnetes verschiebbares Stützeninnenrohr (14), an dessen unteren Endbereich ein Fuß (15) befestigt ist, und das mit einer Mutter (17) verbunden ist, die sich auf einer Spindel (16) befindet, welche über ein Getriebe, das einen schaltbaren Zahnräderbereich und wenigstens eine Kegelradstufe (20, 24) aufweist, antreibbar ist,
wobei ein Schaltungsbereich mit zwei wahlweise in Eingriff bringbaren Zahnradpaaren (27d, 22) vorgesehen ist, bestehend aus einem Lastgangritzel (27d), das mit dem Lastgangzahnrad (22) kämmen kann, und einem Schnellgangzahnrad (26), welches den Antrieb eines Schnellgangritzels (23) bewirken kann, und
wobei ein das Lastgangritzel (27d) aufweisendes Teil, das senkrecht auf die Spindel (16) zuläuft, mit der Spindel (16) in einem gemeinsamen Lagerungenteil (19) gelagert ist, **dadurch gekennzeichnet, dass**
das Schnellgangzahnrad (26) ebenfalls im Lagerungenteil (19) oder im vorderen Wandbereich des Schaftrohrkörpers (13) gelagert ist, und
sich die Verzahnung des Lastgangritzels (27d) an einem Ritzel-Kupplungsteil (27) befindet, das an einem Endbereich einen Lagerzapfen (27a) aufweist, der im Lagerungenteil (19) gelagert ist und am anderen Ende auf einem einseitig gelagerten Triebstück (28) sitzt, das in einem am Schaftrohrkörper (13) angebrachten Außenlager (31) gelagert ist.

2. Höhenverstellbare Stütze für Sattelauflieger nach Anspruch 1, **dadurch gekennzeichnet, dass** das konzentrisch zum Ritzel-Kupplungsteil (27) gelagerte Schnellgangzahnrad (26) permanent mit dem Schnellgangritzel (23) in Eingriff ist.

3. Stütze nach den Ansprüchen 1 oder 2, **dadurch gekennzeichnet, dass** das Außenlager (31) spaltfrei und unlösbar mit dem Schaftrohrkörper (13) verbunden ist.

4. Stütze nach den Ansprüchen 1, 2 oder 3, **dadurch gekennzeichnet, dass** das Außenlager (31) einen Einsatz (33) aufweist, der so dimensioniert ist, dass nach dessen Herausnahme das Ritzel-Kupplungsteil (27) und dasTriebstück (28) ein- und ausbaubar sind.

5. Stütze nach mindestens einem der vorherigen Ansprüche, **dadurch gekennzeichnet, dass** das Ritzel-Kupplungsteil (27) mit einer Verzahnung des Lastgangritzels (27d) ein Kupplungsmittel aufweist.

6. Stütze nach mindestens einem der vorherigen Ansprüche, **dadurch gekennzeichnet, dass** das Ritzel-Kupplungsteil (27) als Kupplungsmittel mindestens einen radial abstehenden Mitnehmer aufweist der in, im Schnellgangzahnrad (26) befindliche Nuten eingreifbar ist.

7. Stütze nach mindestens einem der vorherigen Ansprüche, **dadurch gekennzeichnet, dass** das Ritzel-Kupplungsteil (27) als Kupplungsmittel eine Kuppeiverzahnung (27b) aufweist, die formschlüssig in eine Kuppelverzahnungsaufnahme (26a) des Schnellgangzahnrades (26) eingreifbar ist.

8. Stütze nach mindestens einem der vorherigen Ansprüche, **dadurch gekennzeichnet, dass** das Ritzel-Kupplungsteil (27) zwischen der Verzahnung des Lastgangritzels (27d) und dem Kupplungsmittel einen Freischaltbereich (27c) aufweist, der eine Breite besitzt, die mehr als die Breite des Lastgangzahnrades (22) zuzüglich der Breite des Kupplungsmittels des Schnellgangzahnrades (26) beträgt.

9. Stütze nach mindestens einem der vorherigen Ansprüche, **dadurch gekennzeichnet, dass** das Lagerungenteil (19) eine Bodenkröpfung (19c) aufweist, deren Innenbereich zusammen mit der vorderen Wand des Schaftrohrkörpers (13) einen Einbauraum für das Schnellgangzahnrad (26) sowie einen Schmiermiftetraum ausbildet.

10. Stütze nach mindestens einem der vorherigen Ansprüche, **dadurch gekennzeichnet, dass** die Lagerung der Getriebeabtriebswelle (12) auf der Vorderseite der Stütze (10) in einer nach außen geschlossenen Ausprägung (13b) des Schaftrohrkörper (13) erfolgt.

11. Stütze nach mindestens einem der vorherigen Ansprüche, **dadurch gekennzeichnet, dass** in die Getriebeabtriebswelle (12) eine Verzahnung gemäß dem Schnellgangritzel (23) angeordnet ist.

12. Stütze nach mindestens einem der vorherigen Ansprüche, **dadurch gekennzeichnet, dass** das Lastgangzahnrad (22) und/oder das Kegelritzel (24) drehfest auf der verlängerten Verzahnung gemäß dem Schnellgangritzel (23) der Getriebeabtriebswelle (12) sitzen.

13. Stütze nach mindestens einem der vorherigen Ansprüche, **dadurch gekennzeichnet, dass** die Lagerhülse (32) des Außenlagers (31) nach dem Reibschweißverfahren an den Schaftrohrkörper (13) angeschweißt ist.

## Claims

1. Height adjustable support for semi-trailers or similar, comprising a stationarily mounted shaft tube body,
a slidable support inner tube (14) arranged therein, at whose lower end region a leg (15) is attached and which is connected by means of a nut (17) which is located on a spindle (16) which can be driven by means of a transmission having a shiftable gearwheel section and at least a bevel gear stage (20, 24)
wherein a shifting region with two optionally engagable gearwheel pairs (27d, 22) is provided, consisting of a low-gear pinion (27d) which can mesh with the low-gear gearwheel (22) and a fast-gear gearwheel (26) which can effect that a fast-gear pinion (23) is driven, and
wherein a part having the low-gear pinion (27d) and running perpendicularly towards the spindle (16) is supported with the spindle (16) in a common bearings part (19), **characterized in that**
the fast-gear gearwheel (26) is also supported in the bearings part (19) or in the front wall section of the shaft tube body (13), and
the teeth of the low-gear pinion (27d) are located on a pinion coupling part (27) which at an end region has a journal (27a) supported in the bearings part (19) and sits at its other end on a one-side supported drive part (28) which is supported in an outer bearing (31) attached to the shaft tube body (13).

2. Height adjustable support for semi-trailers according to claim 1, **characterized in that** the fast-gear gearwheel supported concentrically with respect to the pinion coupling part (27) engages permanently with the fast-gear pinion (23).

3. Support according to claim 1 or 2, **characterized in that** the outer bearing (31) is connected with the shaft tube body (13) gap-free and non-releasably.

4. Support according to claims 1, 2 or 3, **characterized in that** the outer bearing (31) has an insert (33) dimensioned such that, after it has been removed, the pinion coupling part (27) and the drive part (28) can be fitted and dismantled.

5. Support according to at least one of the preceding claims, **characterized in that** the pinion coupling part (27) has a coupling means in form of the teeth of the low-gear pinion (27d).

6. Support according to at least one of the preceding claims, **characterized in that** the pinion coupling part (27) has as a coupling means at least a radially protruding carrier which is engageable in grooves located in the fast-gear gearwheel (26).

7. Support according to at least one of the preceding claims, **characterized in that** the pinion coupling part (27) has as a coupling means a clutch gearing (27b) which is positively engageable in a clutch gearing receptacle (26a) of the fast-gear gearwheel (26).

8. Support according to at least one of the preceding claims, **characterized in that** the pinion coupling part (27) has between the teeth of the low-gear pinion (27d) and the coupling means a free-shifting section (27c) possessing a width greater than the width of the low-gear gearwheel (22) plus the width of the coupling means of the fast-gear gearwheel (26).

9. Support according to at least one of the preceding claims, **characterized in that** the bearings part (19) has a floor cranking (19c) whose inner section together with the front wall of the shaft tube body (13) is designed as an installation space for the fast-gear gearwheel (26) as well as a lubricant space.

10. Support according to at least one of the preceding claims, **characterized in that** the transmission output shaft (12) is supported on the front side of the support (10) in a shaping (13b) of the shaft tube body (13) which is closed towards the outside.

11. Support according to at least one of the preceding claims, **characterized in that** in the transmission output shaft (12) teeth corresponding to the fast-gear pinion (23) are arranged.

12. Support according to at least one of the preceding claims, **characterized in that** the low-gear gearwheel (22) and/or the bevel pinion (24) sit unrotatably on the extended teeth corresponding to the fast-gear pinion (23) of the transmission output shaft (12).

13. Support according to at least one of the preceding claims, **characterized in that** the bearing bushing (32) of the outer bearing (31) is welded to the shaft tube body (13) according to the friction welding method.

## Revendications

1. Support réglable en hauteur pour semi-remorques ou similaires, comprenant un corps tubulaire monté stationnaire,
un tube intérieur de support (14) agencé en translation dans celui-ci, avec un pied (15) fixé à la zone terminale inférieure de ce tube intérieur, et relié avec un écrou (17) qui se trouve sur une broche (16), celle-ci pouvant être entraînée par un mécanisme, qui comprend une zone à engrenages commutables et au moins un étage de pignons coniques (20, 24),
dans lequel il est prévu une plage de commutation avec deux paires d'engrenages (27d, 22) qui peuvent être amenés sélectivement en engagement, comprenant un pignon de vitesse en charge (27d) qui peut engrener avec l'engrenage de vitesse en charge (22), et un engrenage de vitesse rapide (26), qui peut effectuer l'entraînement d'un pignon de vitesse rapide (23), et
dans lequel une pièce qui présente le pignon de vitesse en charge (27d) et qui s'approche perpendiculairement vers la broche (16), est montée avec la broche (16) dans une pièce de palier commune (19), **caractérisé en ce que** l'engrenage de vitesse rapide (26) est monté également dans la pièce de palier (19) ou dans la zone de paroi antérieure du corps tubulaire (13), et
la denture du pignon de vitesse en charge (27d) se trouve sur une pièce d'accouplement de pignon (27) qui comporte au niveau de sa région terminale un tenon de palier (27a) qui est monté dans la partie de palier (19), et est monté à l'autre extrémité sur une pièce menée (28) montée d'un côté, qui est montée dans un palier extérieur (31) monté sur le corps tubulaire (13).

2. Support réglable en hauteur pour semi-remorques selon la revendication 1, **caractérisé en ce que** l'engrenage de vitesse rapide monté concentriquement par rapport à la pièce d'accouplement de pignon (27) engrène en permanence avec le pignon de vitesse rapide (23).

3. Support selon les revendications 1 ou 2, **caractérisé en ce que** le palier extérieur (31) est dépourvu de fente et est relié de manière indétachable avec le corps tubulaire (13).

4. Support selon les revendications 1, 2 ou 3, **caractérisé en ce que** le palier extérieur (31) comprend un insert (33) qui est dimensionné de telle manière qu'après son enlèvement la pièce d'accouplement de palier (27) et la pièce menée (28) peuvent être montées et démontées.

5. Support selon l'une au moins des revendications précédentes, **caractérisé en ce que** la pièce d'accouplement de pignon (27) forme un moyen d'accouplement avec une denture du pignon de vitesse en charge (27d).

6. Support selon l'une au moins des revendications précédentes, **caractérisé en ce que** la pièce d'accouplement de pignon (27), comprend à titre de moyen d'accouplement au moins un élément d'entraînement qui dépasse radialement et qui est susceptible de s'engager dans des gorges qui se trouvent dans l'engrenage de vitesse rapide (26).

7. Support selon l'une au moins des revendications précédentes, **caractérisé en ce que** la pièce d'accouplement de pignon (27) comprend à titre de moyens accouplements une denture d'accouplement (27b), qui est capable de s'engager en coopération de forme dans un logement de denture d'accouplement (26a) de l'engrenage de vitesse rapide (26).

8. Support selon l'une au moins des revendications précédentes, **caractérisé en ce que** la pièce d'accouplement de pignon (27) comprend, entre la denture du pignon de vitesse en charge (27d) et le moyen d'accouplement, une plage libre (27c) qui possède une largeur supérieure à la largeur de l'engrenage de vitesse en charge (22) additionnée de la largeur du moyen d'accouplement de l'engrenage de vitesse rapide (26).

9. Support selon l'une au moins des revendications précédentes, **caractérisé en ce que** la partie de palier (19) comprend un coudage (19c) au fond, dont la région intérieure forme, conjointement avec la paroi antérieure du corps tubulaire (13), un espace de montage pour l'engrenage de vitesse rapide (26) ainsi qu'un espace à lubrifiant.

10. Support selon l'une au moins des revendications précédentes, **caractérisé en ce que** le montage de l'arbre menée(12) a lieu sur le côté avant du support (10) dans un relief (13b), fermé vers l'extérieur, du corps tubulaire (13).

11. Support selon l'une au moins des revendications précédentes, **caractérisé en ce que** une denture conforme à celle du pignon de vitesse rapide (23) est agencée dans l'arbre mené (12).

12. Support selon l'une au moins des revendications précédentes, **caractérisé en ce que** l'engrenage de vitesse en charge (22) et/ou le pignon conique (24) est calé solidairement en rotation sur la denture prolongée conforme à celle du pignon de vitesse rapide (23) de l'arbre mené (12).

13. Support selon l'une au moins des revendications précédentes, **caractérisé en ce que** la douille de montage (32) du palier extérieur (31) est soudée sur le corps tubulaire (13) d'après le procédé de soudage par friction.
